# EUROPÄISCHE PATENTANMELDUNG

(11) **EP 0 534 003 A1**
(43) Veröffentlichungstag der Anmeldung: **31.03.1993**
(21) Anmeldenummer: 91201967.6
(22) Anmeldetag: 29.07.1991
(51) Int. Cl.: G01F 1/58

(54) **Messsonde für ein magnetischinduktives Durchflussmessgerät**

(71) Anmelder: KROHNE MESSTECHNIK GMBH & CO. KG, D-47058 Duisburg (DE)
(72) Erfinder: Yvorel, Jean, F-38490 Les Arbrets (FR)
(74) Vertreter: Ackmann, Günther

(57) **Zusammenfassung**

Beschrieben ist eine Meßsonde für ein magnetisch-induktives Durchflußmeßgerät. Diese ist in ein von einer elektrisch leitenden Flüssigkeit durchströmtes Rohr seitlich einsetzbar, wobei die Meßsonde mit zwei nebeneinanderliegenden Magnetpolen (9), deren Feldlinien das Rohrinnere durchsetzen, und zwei Meßelektroden versehen ist, von denen die eine zwischen den beiden Magnetpolen (9) angeordnet ist. Um mit nur einer Meßsonde einen größeren Teil des Magnetfeldes nutzbar zu machen und ein genaueres Meßsignal zu schaffen, ist eine ringförmige Elektrode (4) vorgesehen, innerhalb der die beiden Magnetpole (9) und die zentrische Elektrode (5) liegen. Weiterhin ist vorgesehen, daß die ringförmige Elektrode (4) durch das Kopfende eines zylinderförmigen Gehäuseteils (1) gebildet wird und das Kopfende durch eine elektrisch isolierende Scheibe (3) verschlossen ist, in der die zentrische Elektrode (5) angeordnet ist. Beide Magnetpole (9) und ein Anschlußelement (11) für die zentrische Elektrode (5) sind in einem stabförmigen Bauteil (7) angeordnet, das in das zylinderförmige Gehäuseteil (1) einsteckbar ist, wobei das Anschlußelement (11) elektrisch leitend gegen die zentrische Elektrode (5) und die Magnetpole (9) gegen die Scheibe (3) des Gehäuseteils (1) anliegen.

## Beschreibung

Die Erfindung betrifft eine Meßsonde für ein magnetischinduktives Durchflußmeßgerät, die in ein von einer elektrisch leitenden Flüssigkeit durchströmtes Rohr seitlich einsetzbar ist, wobei die Meßsonde mit zwei nebeneinanderliegenden Magnetpolen, deren Feldlinien das Rohrinnere durchsetzen, und zwei Meßelektroden versehen ist, von denen die eine zwischen den beiden Magnetpolen angeordnet ist.

Aus der DE-U 19 44 979 ist ein seitlich an das durchströmte Rohr ansetzbarer magnetisch-induktiver Strömungsmesser bekannt, bei dem eine Meßelektrode mittig zwischen den beiden dem strömenden Medium zugekehrten Polen des Magneten angeordnet ist, während die zweite Meßelektrode - bezogen auf die von den beiden Magnetpolen definierte Ebene - seitlich neben dem Magneten angeordnet ist. Der Nachteil dieser Anordnung besteht darin, daß nur der zwischen den beiden Elektroden verlaufende Teil des Magnetfeldes für den Meßvorgang nutzbar ist. Ein weiterer Nachteil ist darin zu sehen, daß für eine Reparatur des Elektromagneten und der Elektrodenableitungen die ganze Baueinheit aus dem zuvor zu entleerenden Rohr angebaut werden muß. Um einen größeren Teil des Magnetfeldes nutzbar zu machen, wird in der EP 0 179 285 B1 die Anordnung von zwei Meßsonden vorgeschlagen, bei denen jeweils nur eine mittig zwischen den beiden Magnetpolen liegenden Meßelektrode vorgesehen ist und der zwischen diesen beiden Meßelektroden gemessene Differenzwert ausgewertet wird. Die Ausführung setzt jedoch den Einbau von mindestens zwei Meßsonden voraus.

Demgegenüber liegt der Erfindung die Aufgabe zugrunde, mit nur einer Meßsonde einen größeren Teil des Magnetfeldes nutzbar zu machen und ein genaueres Meßsignal zu schaffen.

Diese Aufgabe wird erfindungsgemäß durch eine ringförmige Elektrode gelöst, innerhalb der die beiden Magnetpole und die zentrische Elektrode liegen. Durch die ringförmige Ausbildung der mit einer zentrisch Elektrode zusammenwirkenden zweiten Elektrode wird der gesamte darin verlaufende Teil des Magnetfeldes für den Meßvorgang ausgenutzt und ein genaueres Meßsignal erzeugt.

Bei einer bevorzugten Ausführung wird die ringförmige Elektrode durch das Kopfende eines zylinderförmigen Gehäuseteils gebildet und ist das Kopfende durch eine elektrisch isolierende Scheibe verschlossen, in der die zentrische Elektrode angeordnet ist, und die beiden Magnetpole und ein Anschlußelement für die zentrische Elektrode sind in einem stabförmigen Bauteil angeordnet, das in das zylinderförmige Gehäuseteil einsteckbar ist, wobei das Anschlußelement elektrisch leitend gegen die zentrische Elektrode und die Magnetpole gegen die Scheibe des Gehäuseteils anliegen. Diese Ausführung hat zunächst den Vorteil, daß die Meßsonde unterteilt ist in ein zylinderförmiges Gehäuseteil, das mit dem Strömungsrohr fest und abdichtend verbunden ist und einen Hohlraum bildet, in den das mit den elektrischen Bauelementen ausgerüstete stabförmige Bauteil einsteckbar ist. Im Falle einer Reparatur der elektrischen Bauelemente, wie Elektromagnete, Elektrodenableitung u. dgl. braucht nur das stabförmige Bauteil aus dem eingebauten zylinderförmigen Gehäuseteil herausgezogen zu werden. Da das zylinderförmige Bauteil im Rohr eingebaut bleibt, kann keine Flüssigkeit aus dem Meßrohr austreten, so daß eine Unterbrechung der Flüssigkeitsströmung nicht erforderlich ist.

Vorzugsweise ist das Anschlußelement im stabförmigen Bauteil rohrförmig ausgebildet und an der Scheibe des zylinderförmigen Gehäuseteils ist ein mit der zentrischen Elektrode leitend verbundener Stift angeordnet, der im zusammengebauten Zustand der Meßsonde gegen das untere Ende des Anschlußelements anliegt. Durch diese Ausbildung wird ein besonders guter Kontakt zwischen der dem zylinderförmigen Gehäuseteil zugeordneten zentrischen Elektrode und dem Anschlußelement im stabförmigen Bauteil hergestellt. Nach einem weiteren Merkmal der Erfindung ist das zylinderförmige Gehäuseteil mit einem Außengewinde abdichtend in das Rohr einschraubbar. Hierdurch wird das zylinderförmige Gehäuse mit der zugehörigen ringförmigen Elektrode unmittelbar an die Masse angeschlossen.

Eine besonders schlanke Ausbildung des stabförmigen Bauteils läßt sich dadurch schaffen, daß zwei Stabmagnete mit zugehörigen Wicklungen vorgesehen sind. Zweckmäßig besteht das stabförmige Bauteil aus Kunststoff, in dem die Stabmagnete und das rohrförmige Anschlußelement eingebettet sind.

Die Scheibe des zylinderförmigen Gehäuseteils kann aus einem beliebigen isolierenden Stoff, beispielsweise Kunststoff bestehen. Vorzugsweise besteht sie jedoch aus einem keramischen Werkstoff, in den die zentrische Elektrode dicht eingebettet ist. Die ringförmige Elektrode kann einen kreisförmigen, quadratischen oder mehreckigen Querschnitt haben.

Der Gegenstand der Erfindung ist in der Zeichnung anhand eines Ausführungsbeispiels dargestellt; es zeigt
- Fig. 1: einen mittleren Längsschnitt durch eine Meßsonde,
- Fig. 2: das der Meßsonde zugehörige zylinderförmige Gehäuseteil in einem mittleren Längsschnitt,
- Fig. 3: das der Meßsonde zugehörige stabförmige Bauteil und
- Fig. 4: eine Draufsicht auf den Kopf der Meßsonde.

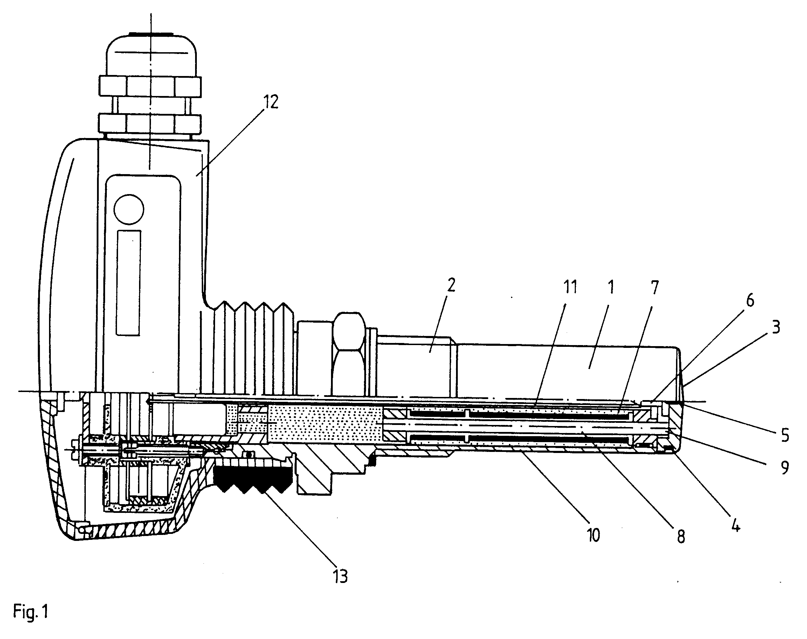

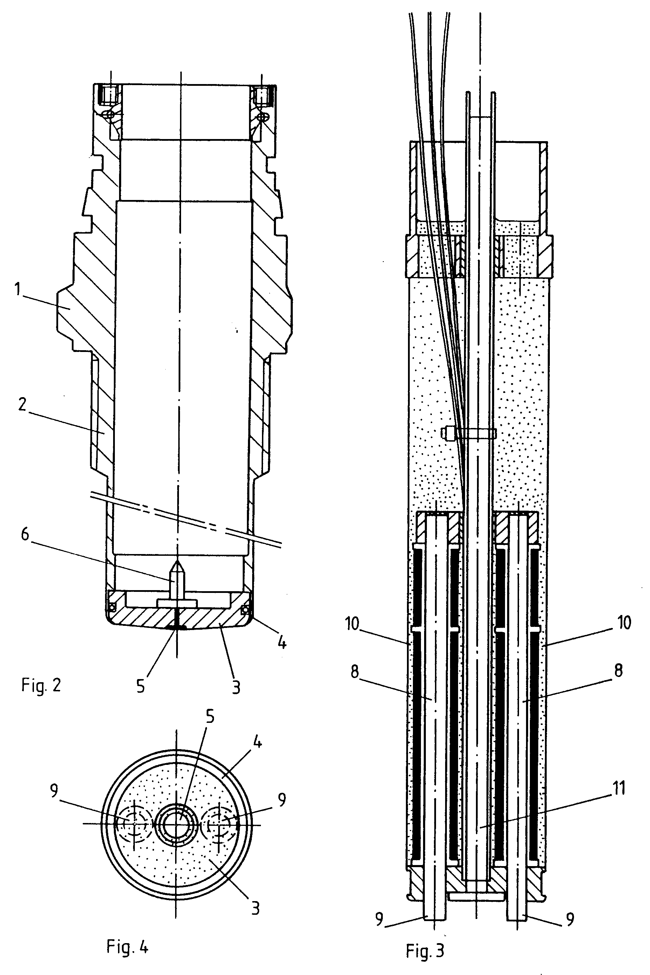

Die in Fig. 1 dargestellte Meßsonde besteht im wesentlichen aus einem zylinderförmigen Gehäuseteil 1 aus metallischem Werkstoff. Dieses ist mit einem Außengewinde 2 in eine seitliche Gewindebohrung eines in der Zeichnung nicht dargestellten, von einer elektrisch leitenden Flüssigkeit durchströmten Rohres einschraubt, wobei es in das Rohrinnere hineinragt. Das Kopfende des zylinderförmigen Gehäuseteils 1 bildet eine ringförmige Elektrode 4 und ist mit einer Scheibe 3 aus einem elektrisch isolierenden Werkstoff versehen, in den eine zentrische Elektrode 5 dicht eingebettet ist. Wie insbesondere Fig. 2 zeigt, ist die Scheibe 3 bördelartig von der ringförmigen Elektrode 4 eingefaßt, wobei geeignete Dichtungselemente vorgesehen sind, so daß das Innere des zylinderförmigen Gehäuseteils 1 gegenüber der durch das Rohr durchströmenden Flüssigkeit abgedichtet ist. Die ringförmige Elektrode 4 bildet also einen unmittelbaren Bestandteil des metallischen zylinderförmigen Gehäuseteils 1, das über das Rohr geerdet ist. An der Scheibe 3 des zylinderförmigen Gehäuseteils 1 ist ein mit der zentrischen Elektrode 5 leitend verbundener Stift 6 angebracht.

In das zylinderförmige Gehäuseteil 1 ist ein stabförmiges Bauteil 7 eingesteckt, welches die der Meßsonde zugehörigen elektrischen Bauteile aufweist. Das in Fig. 1 dargestellte stabförmige Bauteil 7 besteht aus Kunststoff, in den zwei Stabmagnete 8 mit zugehörigen Wicklungen 10 und ein rohrförmiges Anschlußelement 11 eingebettet sind. Diese Teile sind so angeordnet, daß der Stift 6 im zusammengebauten Zustand der Meßsonde gegen das untere Ende des Anschlußelements 11 anliegt und die beiden Magnetpole gegen die Scheibe 3 des Gehäuseteils 1 anliegen. Das eingesteckte stabförmige Bauteil 7 ist auswechselbar am zylinderförmigen Gehäuseteil 1 befestigt.

Fig. 3 zeigt, daß am äußeren Ende des zylinderförmigen Gehäuseteils ein Anschlußgehäuse 12 angebracht ist. Dieses enthält die elektrischen Anschlußteile für die Wicklungen 10 und das Anschlußelement 11, sowie elektronische Bauteile für die Signalverarbeitung. Bei Ausführungsbeispiel ist das Anschlußgehäuse 12 mit dem daran befestigten stabförmigen Bauteil 7 durch einen Schnappverschluß 13 am äußeren Ende des zylinderförmigen Gehäuseteils 1 befestigt, wobei die Befestigung lösbar ist, so daß das stabförmige Bauteil für Reparaturzwecke herausnehmbar ist.

Die ringförmige Elektrode 4 hat in dem dargestellten Ausführungsbeispiel einen kreisförmigen Grundriß. Stattdessen kann aber auch ein quadratischer oder mehreckiger Querschnitt vorgesehen sein. Die Scheibe 3 des zylinderförmigen Gehäuseteils 1, welche das Kopfende abdichtend gegen die Strömungsflüssigkeit verschließt, kann aus einem geeigneten Kunststoff oder aus einer keramischen Masse bestehen, in welche die zentrische Elektrode 5 eingeformt bzw. eingesintert ist.

## Patentansprüche

1. Meßsonde für ein magnetisch-induktives Durchflußmeßgerät, die in ein von einer elektrisch leitenden Flüssigkeit durchströmtes Rohr seitlich einsetzbar ist, wobei die Meßsonde mit zwei nebeneinanderliegenden Magnetpolen, deren Feldlinien das Rohrinnere durchsetzen, und zwei Meßelektroden versehen ist, von denen die eine zwischen den beiden Magnetpolen angeordnet ist, gekennzeichnet durch eine ringförmige Elektrode (4) innerhalb der die beiden Magnetpole (9) und die zentrische Elektrode (5) liegen.

2. Meßsonde nach Anspruch 1 dadurch gekennzeichnet, daß die ringförmige Elektrode (4) durch das Kopfende eines zylinderförmigen Gehäuseteils (1) gebildet wird und das Kopfende durch eine elektrisch isolierende Scheibe (3) verschlossen ist, in der die zentrische Elektrode (5) angeordnet ist und daß die beiden Magnetpole (9) und ein Anschlußelement (11) für die zentrische Elektrode (5) in einem stabförmigen Bauteil (7) angeordnet sind, das in das zylinderförmige Gehäuseteil (1) einsteckbar ist, wobei das Anschlußelement (11) elektrisch leitend gegen die zentrische Elektrode (5) und die Magnetpole (9) gegen die Scheibe (3) des Gehäuseteils (1) anliegen.

3. Meßsonde nach Anspruch 1 oder 2, dadurch gekennzeichnet, daß das Anschlußelement (11) im stabförmigen Bauteil (7) rohrförmig ausgebildet ist und an der Scheibe (3) des zylinderförmigen Gehäuseteils (1) ein mit der zentrischen Elektrode (5) leitend verbundener Stift (6) angeordnet ist, der im zusammengebauten Zustand der Meßsonde gegen das untere Ende des Anschlußelements (11) anliegt.

4. Meßsonde nach einem der Ansprüche 1 bis 3, dadurch gekennzeichnet, daß das zylinderförmige Gehäuseteil (1) mit einem Außengewinde (2) abdichtend in das Rohr einschraubbar ist.

5. Meßsonde nach einem der Ansprüche 1 bis 4, dadurch gekennzeichnet daß das stabförmige Bauteil (7) mit zwei Stabmagneten (8) mit zugehörigen Wicklungen (10) versehen ist.

6. Meßsonde nach einem der Ansprüche 1 bis 5, dadurch gekennzeichnet, daß das stabförmige Bauteil (7) aus Kunststoff besteht, in dem die Stabmagnete (8) und das rohrförmige Anschlußelement (11) eingebettet sind.

7. Meßsonde nach einem der Ansprüche 1 bis 6, dadurch gekennzeichnet, daß die Scheibe (3) des zylinderförmigen Gehäuseteils (1) aus einem keramischen Werkstoff besteht, in den die zentrische Elektrode (5) dicht eingebettet ist.

8. Meßsonde nach einem der Ansprüche 1 bis 7, dadurch gekennzeichnet, daß die ringförmige Elektrode (4) einen kreisförmigen, quadratischen oder mehreckigen Querschnitt hat.
